# EUROPEAN PATENT APPLICATION

(11) **EP 1 887 508 A2**
(43) Date of publication of application: **13.02.2008**
(21) Application number: 07015588.2
(22) Date of filing: 08.08.2007
(51) Int. Cl.: G06Q 30/00

(54) **Method and apparatus for acquiring DRM contents in mobile communication terminal**

(30) Priority: 08.08.2006 KR 20060074651
(71) Applicant: Samsung Electronics Co., Ltd, Suwon-si, Gyeonggi-do (KR)
(72) Inventor: Kim, Ki Yeung, Suwon-si Gyeonggi-do (KR)
(74) Representative: Boakes, Jason Carrington

(57) **Abstract**

A method and apparatus for acquiring DRM contents in a mobile communication terminal at a reduced expense by acquiring information about the DRM contents provided through a plurality of content providers are provided. The method and apparatus for acquiring DRM contents includes acquiring price information for DRM contents provided from a plurality of content providers upon request for acquiring DRM contents, selecting a content provider using the acquired price information and acquiring the DRM contents and a license from the selected content provider. Therefore, DRM contents can be acquired by selecting the least expensive DRM content provider at a present point in time using a content information server in which the content information is stored and then connecting to the corresponding content provider to ultimately reduce the cost for acquiring the DRM contents.

## Description

### BACKGROUND OF THE INVENTION

### Field of the Invention

The present invention relates to a method of acquiring digital rights management (hereinafter, "DRM") contents in a mobile communication terminal. More particularly, the present invention relates to a cost efficient method and apparatus to acquire DRM contents in a mobile communication terminal by acquiring information about the DRM contents provided through a plurality of content providers.

### Description of the Related Art

DRM technology is a technology for continuously managing and protecting intellectual property rights of digital contents using encryption technology: DRM technology safely transmits a variety of contents from a content provider (CP) to a user and prevents a user from illegally circulating the contents.

DRM technology can protect information through entire processes of generation, distribution, use, and disposal of digital contents and their use according to a user's right in off-line and on-line situations.

In order to use contents to which the DRM technology is applied (hereinafter, "DRM contents") in a mobile communication terminal, the mobile communication terminal initially connects to a content provider that provides corresponding DRM contents to download DRM contents, meta data for the DRM contents, and a license. The meta data is data in which information about DRM contents is stored, and the license includes a decryption key for decrypting encrypted contents and the right (for example, the number of times of execution and a period, among others) for using the contents.

When both the DRM contents and the license are stored in the mobile communication terminal through such a process, a user may use the DRM contents.

A user may use DRM contents under the rights set up in the license. More specifically, a user may use the DRM contents according to a set number of times of execution as specified in the license. Similarly, when a period is set in the license, a user may use DRM contents for only the set period.

If the corresponding license for the DRM contents stored in the mobile communication terminal has expired, the DRM contents may no longer be used. Accordingly, if a user wants to continuously use DRM contents for which the period has expired, the user should reconnect to a content provider, pay for and acquire a new license.

However, in a conventional case, if a license expires, a license for the corresponding DRM contents is acquired from the same content provider. That is, when a license expires during the use of DRM contents with their licenses requested from a content provider 'A', a user reconnects to the content provider 'A' and acquires an additional license.

Since the conventional method of acquiring a license facilitates a user's ability to acquire the license from an existing content provider without consideration of an acquisition expense of DRM contents for each content provider, it is not efficient in reducing expense. That is, despite the fact that other content providers provide the same DRM contents at a reduced price, a user may waste resources by using the existing content provider without verifying other options.

Accordingly, there is a need for an improved system and more cost effective method of allowing a user to acquire a license from an existing content provider.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a method and apparatus for acquiring DRM contents in a mobile communication terminal at the lowest price by collecting and comparing information about desired DRM contents from a plurality of content providers.

According to an exemplary embodiment of the present invention, the above and other objects are accomplished by a method of acquiring DRM contents from a plurality of content providers. Information about DRM contents is acquired, a content provider is selected using the acquired content information and DRM contents and a license are acquired from the selected content provider.

According to an exemplary implementation, when a content provider is selected, price information about the DRM contents for each content provider may be displayed using the acquired content information and one of the displayed content providers may be selected.

In accordance with another aspect of an exemplary embodiment of the present invention, the above and other objects are accomplished by a method of reacquiring DRM contents from a plurality of content providers. According to an exemplary implementation, the expiration of a license for the DRM contents may be displayed, a request for reacquiring the DRM contents for which the license expiration is displayed may be received and information about the DRM contents for which reacquisition is requested may be acquired. A content provider using the acquired content information may be selected and the DRM contents and the license from the selected content provider may be acquired.

In accordance with another aspect of an exemplary embodiment of the present invention, a mobile communication terminal includes an information acquisition unit, a provider selecting unit, a content acquisition unit and a network communication unit. The information acquisition unit acquires information about DRM contents and the provider selecting unit selects a content provider using the acquired content information. The content acquisition unit acquires DRM contents and a license from the selected content provider. The network communication unit receives the acquired DRM contents, license, and content information.

According to an exemplary implementation, the information acquisition unit may acquire the content information by connecting to a content information server in which the content information is stored.

According to another aspect of an exemplary embodiment of the present invention, the above and other objects are accomplished by a method of providing information about DRM contents in a mobile communication terminal. A request signal for content information from the mobile communication terminal is received, the requested content information based on the request signal for content information is extracted and the extracted content information is transmitted to the mobile communication terminal.

In accordance with another aspect of an exemplary embodiment of the present invention, the above and other objects are accomplished by a DRM content information server that includes a content information database, a network communication unit and an information processor. A variety of information about DRM contents is stored in the content information database. The network communication unit receives a request signal for content information from a mobile communication terminal. The information processor extracts the content information requested by the mobile communication terminal from the content information database and transmits the extracted content information to the mobile communication terminal through the network communication unit.

According to an exemplary implementation, if the content information requested by the mobile communication terminal is not in the content information database, the information processor may collect the content information by connecting to each of a plurality of content providers.

In accordance with another aspect of an exemplary embodiment of the present invention, the above and other objects are accomplished by a DRM content acquisition system that includes a plurality of content providers, a content information server and a mobile communication terminal. Each of the content providers has a content server for providing DRM contents and a license server for providing a license for the DRM contents. The content information server collects and stores content information from the content providers. The mobile communication terminal acquires the content information from the content information server, selects a content provider based on the acquired content information, and acquires the DRM contents and the license from the selected content provider.

According to another exemplary embodiment of the present invention, an information acquisition unit, a provider selecting unit, and a content acquisition unit are included in a controller, and a network communication unit is included in a radio frequency (RF) unit.

### BRIEF DESCRIPTION OF THE DRAWINGS

The above and other exemplary objects, features and advantages of certain exemplary embodiments of the present invention will be more apparent from the following description taken in conjunction with the accompanying drawings, in which:

FIG. 1 is a view illustrating a network of a DRM content acquisition system according to an exemplary embodiment of the present invention;

FIG. 2 is a flowchart of a DRM content acquisition system according to an exemplary embodiment of the present invention;

FIG. 3 is a block diagram schematically illustrating a configuration of a mobile communication terminal according to an exemplary embodiment of the present invention;

FIG. 4 is a flowchart illustrating a method of acquiring DRM contents according to an exemplary embodiment of the present invention;

FIGs. 5A and 5B are flowcharts illustrating a method of reacquiring DRM contents according to an exemplary embodiment of the present invention;

FIG. 6 is a block diagram schematically illustrating a configuration of a content information server according to an exemplary embodiment of the present invention; and

FIG. 7 is a flowchart illustrating a method of providing DRM content information according to an exemplary embodiment of the present invention.

Throughout the drawings, the same drawing reference numerals will be understood to refer to the same elements, features and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

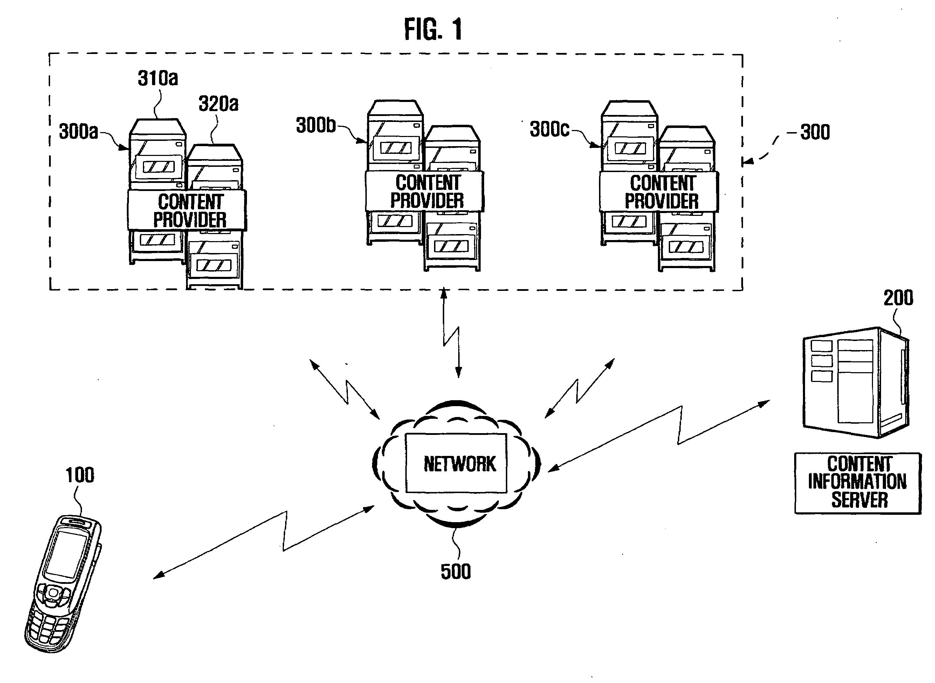

FIG. 1 illustrates a network of a DRM content acquisition system according to an exemplary embodiment of the present invention.

Referring to FIG. 1, the DRM content acquisition system includes a content provider 300, a content information server 200, and a mobile communication terminal 100, connected through a network 500.

The content provider 300 is composed of a plurality of content providers (300a to 300c, hereinafter, will be described in relation to only 300a) and includes a content server 310a and a license server 320a.

When the mobile communication terminal 100 requests a predetermined content through the network 500, the content server 310a supplies DRM contents and additional data encrypted by applying DRM technology to the mobile communication terminal 100 in a streaming or download manner. The additional data provided with the contents includes meta data for containing any additional description about the corresponding contents, and meta data for reading additional meta data when there is no meta data reading module.

The license server 320a is a server for performing a function of authorizing a license for a user, and is always required when DRM contents and a license supplied from the content server 310a are separately distributed.

The content information server 200 stores information about various contents using a database and provides the content information when the mobile communication terminal 100 requests the content information through the network 500. The content information server 200 also periodically connects to the content server 310a to collect content information, thereby updating the stored content information.

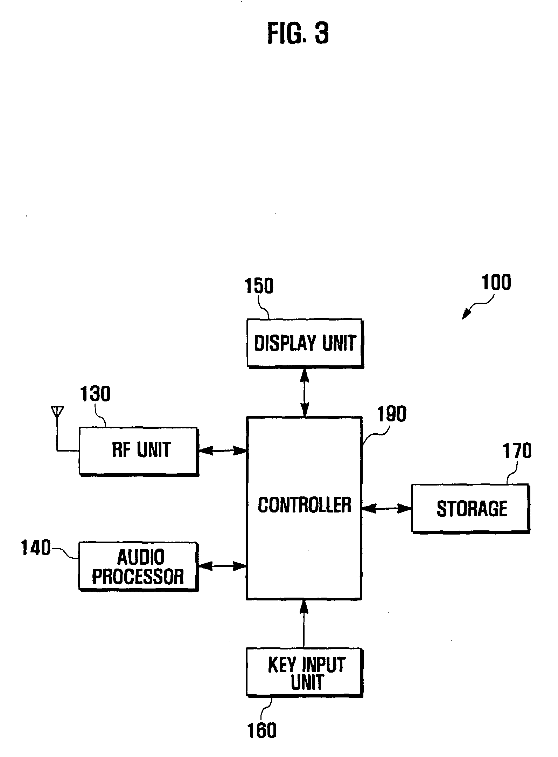

The mobile communication terminal 100 requests a predetermined content to the content server 310a through the network 500, receives a license from the license server 320a to secure the right to use the content, and reproduces DRM contents by decrypting the DRM contents encrypted by a DRM technique. The mobile communication terminal 100 is described in detail with reference to FIG. 3.

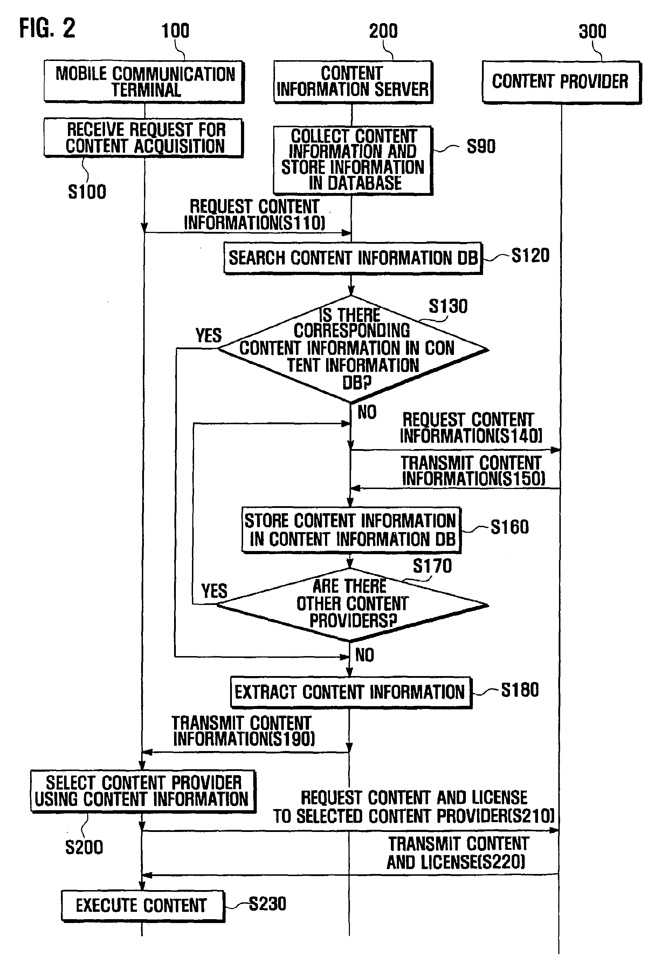

FIG. 2 is a flowchart of a DRM content acquisition system according to an exemplary embodiment of the present invention.

Referring to FIGs. 1 and 2, the flow of the DRM content acquisition system according to an exemplary embodiment of the present embodiment is as follows.

The content information server 200 is provided with a content information database for storing content information about various DRM contents. The content information server 200 periodically collects and updates content information so that up-to-date content information may be stored in the content information database (S90).

When a content acquisition request is input to the mobile communication terminal 100 by a user who wants to acquire and execute specific DRM content (S100), the mobile communication terminal 100 connects to the content information server 200 to request content information (S 110).

The content information server 200, having received the content information request, searches the content information database (S120).

The content information server 200 determines whether it has the content information requested from the mobile communication terminal 100 (S 130). If the content information server 200 has the requested content information, the content information server 200 extracts the corresponding content information from the content information database (S180). If the content information server 200 does not have the requested content information, the content information server 200 connects to the content provider 300 to transmit a content information request signal (S 140).

The content provider 300 that has received the request signal, transmits the corresponding content information to the content information server 200 (S 150). The content information server 200 stores the transmitted content information in the content information database (S160) and determines whether other content providers 300 exist (S 170).

If other content providers 300 exist, the content information server 200 repeats steps S140 to S160. However, if other content providers 300 do not exist, the content information server 200 extracts the requested content information from the content information database (S 180) and transmits the extracted content information to the mobile communication terminal 100 (S 190).

The mobile communication terminal 100 that has received the content information, selects one of a plurality of content providers 300 (S200). The content information may be price information regarding the corresponding content, and the selected content provider 300 may be the content provider 300 that supplies the corresponding content at the least expensive price.

When one content provider 300 is selected, the mobile communication terminal 100 connects to the corresponding content provider 300 to request corresponding DRM contents and a license for using the contents (S210).

The content provider 300 transmits the corresponding DRM contents and license in response to the request of the mobile communication terminal 100 (S220). During the process of requesting and receiving the DRM contents and the license for using the contents, a payment process for the purchase of the DRM contents and the license is generally performed. However, the expense payment process is generally a well-known process and thus descriptions thereof will be omitted throughout the specification.

Once the mobile communication terminal 100 has acquired the corresponding DRM contents and license the above process is performed and the mobile communication terminal 100 executes the acquired DRM contents according to a user's request (S230).

FIG. 3 is a block diagram schematically illustrating an internal configuration of a mobile communication terminal according to an exemplary embodiment of the present invention.

Referring to FIGs. 1 to 3, the mobile communication terminal 100 includes a controller 190, an RF unit 130, an audio processor 140, a key input unit 160, a display unit 150, and a storage 170.

The RF unit 130 transmits and receives corresponding data for radio communication of the mobile communication terminal 100. The RF unit 130 includes an RF transmitter for up-converting and amplifying a frequency of the transmitted signal and an RF receiver for low-noise amplifying and down-converting a frequency of the received signal. The RF unit 130 receives data through a radio channel to output the data to the controller 190 and receives data output from the controller 190 to transmit the data through the radio channel.

The audio processor 140 may include a codec (coder/decoder), and the codec may include a data codec for processing packet data and an audio codec for processing an audio signal such as voice. Accordingly, the audio processor 140 converts a digital audio signal received from the controller 190 to an analog signal through the audio codec and reproduces the signal through a speaker. The audio processor also converts an analog audio signal input from a microphone to a digital audio signal through the audio codec and supplies the signal to the controller 190.

The key input unit 160 receives a user's manipulation signal for controlling the mobile communication terminal 100 to transmit the signal to the controller 190. The key input unit 160 includes a plurality of alphanumeric keys (not shown) for inputting number and character information, among others and control keys (not shown) for controlling an operation of the mobile communication terminal 100.

The display unit 150 displays image data transmitted from the controller 190. A liquid crystal display (LCD) can be applied to the display unit 150. According to an exemplary implementation, the display unit 150 may include an LCD controller, a memory for storing image data, and an LCD display element. When the LCD is embodied with a touch screen scheme, a screen of the display unit 150 can operate as an input unit.

The storage 170 may include a program memory and a data memory. Programs for controlling general operation of the mobile communication terminal 100 are stored in the program memory. Data generated while executing programs and various content files including a DRM content file are stored in the data memory. Licenses for executing the stored DRM contents and addresses (such as URI) of a content information server (200 in FIG. 1) of content providers (300 in FIG. 1) required to acquire the licenses for the DRM contents are also stored in the data memory.

The controller 190 performs a general control operation of the mobile communication terminal 100. The controller 190 also connects to the content information server (200 in FIG. 1) and the content provider (300a in FIG. 1) according to a user's DRM content acquisition request to acquire content information, DRM contents and a license, among others, and executes corresponding DRM contents according to a user's execution request.

A method of acquiring DRM contents according to an exemplary embodiment of the present invention is described in detail as follows. The configuration of the mobile communication terminal 100 will be more apparent from the following description regarding the method of acquiring DRM contents.

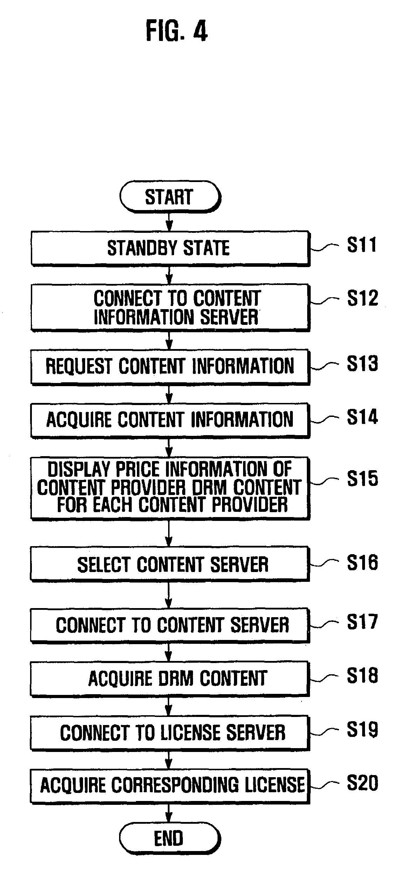

FIG. 4 is a flowchart illustrating the method of acquiring DRM contents in the mobile communication terminal 100 according to an exemplary embodiment of the present invention.

Referring to FIGs. 1 to 4, when a user wants to acquire new DRM contents, the mobile communication terminal 100 in a standby state (S11) initially connects to the content information server 200 through a network (S 12).

The mobile communication terminal 100 requests information about DRM contents that a user wants to acquire to the content information server 200 (S 13). The DRM contents indicate contents to which a DRM technology is applied, and the content information indicates all information about the DRM contents. The content information in an exemplary embodiment of the present embodiment includes price information for providing the DRM contents by the content provider 300. Accordingly, the content information server 200 stores price information about the DRM contents and supplies the stored content information at the request of the mobile communication terminal 100.

The content information server 200 extracts content information requested from the mobile communication terminal 100. The content information server 200 also transmits the information to the mobile communication terminal 100, and thereby the mobile communication terminal 100 acquires the requested DRM content information that the user wants to acquire (S 14).

The controller 190 of the mobile communication terminal 100 displays the price information of the DRM contents in the display unit 150 (S15). Accordingly, the content providers 300 and the price information of the DRM contents supplied from each content provider 300 are displayed in the display unit 150.

The user verifies the price information of the DRM contents displayed in the display unit 150 and selects the least expensive content provider 300a (hereinafter, it is assumed that 300a of FIG. 1 is selected throughout the specification) (S16). The controller 190 then connects to the content server 310a of the corresponding content provider 300a with reference to a URI address of the selected content provider 300a stored in the storage unit 170 (S 17), and requests the DRM contents desired by the user. The content server 310a transmits the corresponding DRM contents to the mobile communication terminal 100 (S 18), so that the mobile communication terminal 100 thereby acquires the requested DRM contents.

According to an exemplary implementation, the mobile communication terminal 100 connects to the license server 320a to request a license to acquire a license for DRM contents (S19), and acquires a corresponding license from the license server 320a (S20).

As described above, in a method of acquiring DRM contents according to an exemplary embodiment of the present invention the least expensive DRM content provider 300a at a present point in time is selected using the content information server 200 and then a connection is made with the corresponding content provider 300a to acquire the DRM contents.

Next, a method of reacquiring DRM contents is described when a license for the DRM contents that have been stored and used in the mobile communication terminal 100 has expired.

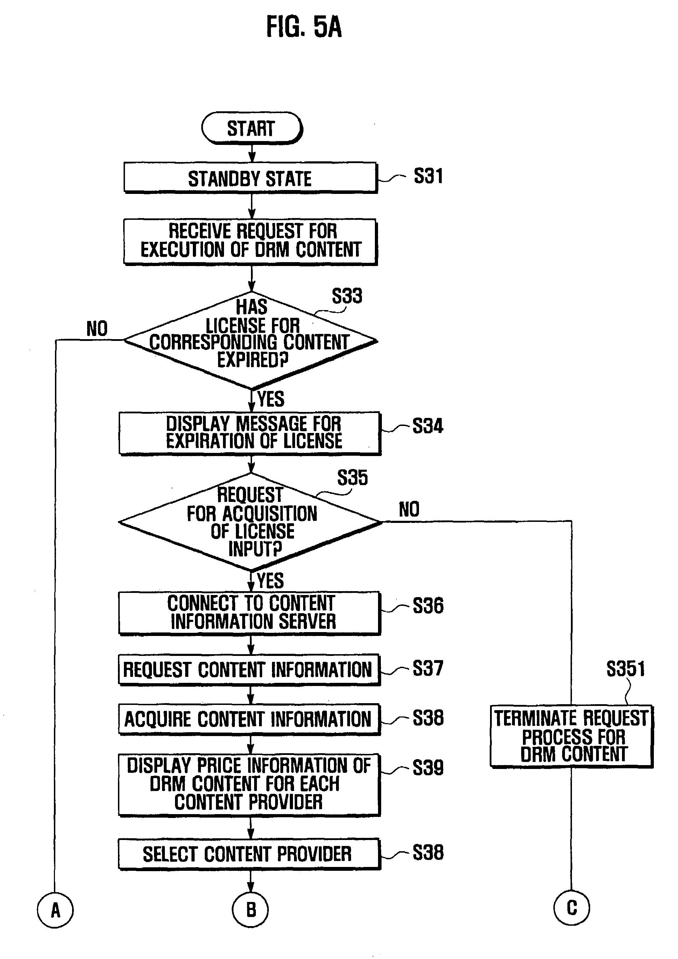

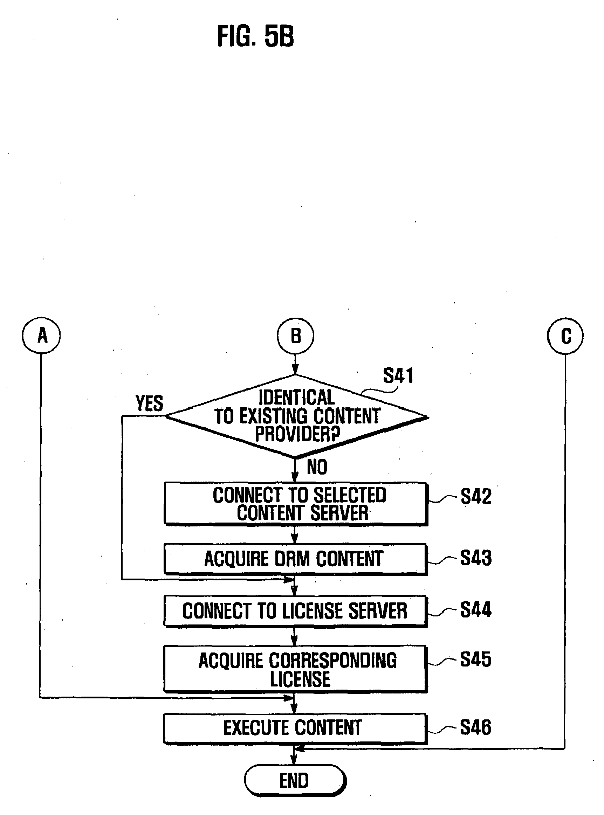

FIGs. 5A to 5B are flowcharts illustrating a method of reacquiring DRM contents according to an exemplary embodiment of the present invention.

Referring to FIGs. 1 to 3 and 5, the mobile communication terminal 100 in a standby state (S31) initially receives an execution request for a specific DRM content (S32). When an execution request for a specific DRM content of the DRM contents that have been stored in the mobile communication terminal 100 by a user is received, the controller 190 verifies whether a license for the DRM contents for which the execution is requested has expired (S33).

If the license has not expired, the controller 190 executes the DRM contents (S46).

However, if a license for the DRM contents for which the execution is requested has expired, the controller 190 displays a message informing the user that the license for the DRM contents for which the execution is requested has expired through the display unit 150. The message also inquires as to whether the user wants to reacquire the license (S34). The mobile communication terminal 100 determines whether a request to acquire the license is input (S35).

If the user does not request to reacquire the license after recognizing the fact that the license for the DRM content has expired, the controller 190 terminates the request process for DRM content and reconverts the mobile communication terminal 100 to a standby state (S351).

However, if the user makes a request to reacquire the license, the controller 190 of the mobile communication terminal 100 connects to the content information server 200 (S36).

The mobile communication terminal 100 requests information about the DRM content that a user wants to acquire to the content information server 200 (S37). The content information includes price information about the DRM content according to the content provider 300 that provides the DRM content, as in the method of FIG. 4.

The content information server 200 extracts the requested content information and transmits the information to the mobile communication terminal 100, and thereby the mobile communication terminal 100 acquires the requested DRM content information that the user would like to acquire (S38).

The controller 190 of the mobile communication terminal 100 displays the price information about the DRM content in the display unit 150 (S39). The content providers 300 and the price information about the DRM content for each content provider 300 are displayed in the display unit 150.

The user verifies the price information about the DRM content displayed in the display unit 150 and selects a desired content provider 300a (S40). The controller 190 of the mobile communication terminal 100 then determines whether the selected content provider 300a is identical to the existing content provider 300 providing the DRM content that has been stored and used in the mobile communication terminal 100 (S41).

If the selected content provider 300a is not identical to the existing content provider 300 providing the DRM content that has been stored and used in the mobile communication terminal 100, the controller 190 of the mobile communication terminal 100 connects to the content server 310a of the selected content provider 300a (S42). The mobile communication terminal 100 requests the desired DRM content from the content server 310a, and acquires the corresponding DRM content (S43).

The mobile communication terminal 100 then connects to the license server 320a to request a license to acquire the license for the DRM content (S44), and receives the corresponding license from the license server 320a (S45).

At step S41, if the selected content provider 300a is identical to the existing content provider 300 providing the DRM content that has been stored and used in the mobile communication terminal 100, the mobile communication terminal 100 can execute the desired DRM content through a process of reacquiring only the license. According to an exemplary implementation, the controller 190 of the mobile communication terminal 100 does not connect to the content server 310a of the corresponding content provider 300a, but directly connects to the license server 320a to request the license (S44), and acquires the corresponding license from the license server 320a (S45).

When the DRM content and the license is acquired through the above process, the controller 190 executes the reacquired DRM content (S46).

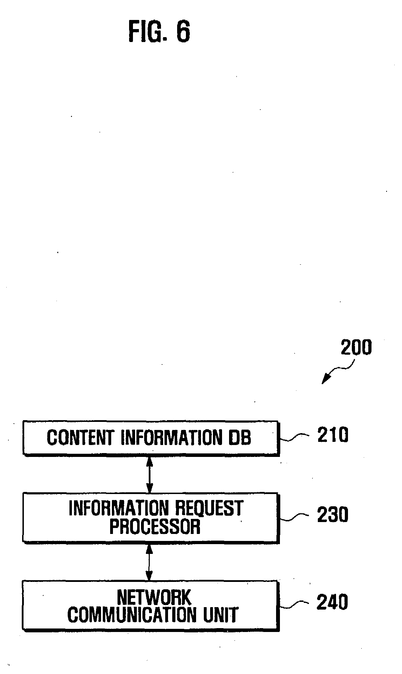

FIG. 6 is a block diagram schematically illustrating a configuration of a content information server according to an exemplary embodiment of the present invention.

Referring to FIGs. 1, 2, and 6, the content information server 200 includes a content information database 210, an information request processor 230, and a network communication unit 240.

The network communication unit 240 connects to the content provider 300 and the mobile communication terminal 100 through a network. The content information server 200 requests content information to the content server 310a of the content provider 300a through the network communication unit 240 and receives the requested content information transmitted by the content server 310a. The content information server 200 also receives a content information request signal transmitted from the mobile communication terminal 100 through the network communication unit 240 and transmits the corresponding content information to the mobile communication terminal 100.

A variety of information (for example, price information) regarding the DRM contents is stored in the content information database 210. The content information database 210 is periodically updated by the information request processor 230 to store the latest information.

When a content information request signal of the mobile communication terminal 100 is received through the network communication unit 240, the information request processor 230 searches the content information database 210 to extract the corresponding content information. If the corresponding content information is not stored in the content information database 210, the information request processor 230 connects to the content provider 300 through the network communication unit 240 to collect the corresponding content information and stores the information in the content information database 210. Further, the information request processor 230 periodically connects to the content providers to collect the latest content information and stores the information in the content information database 210.

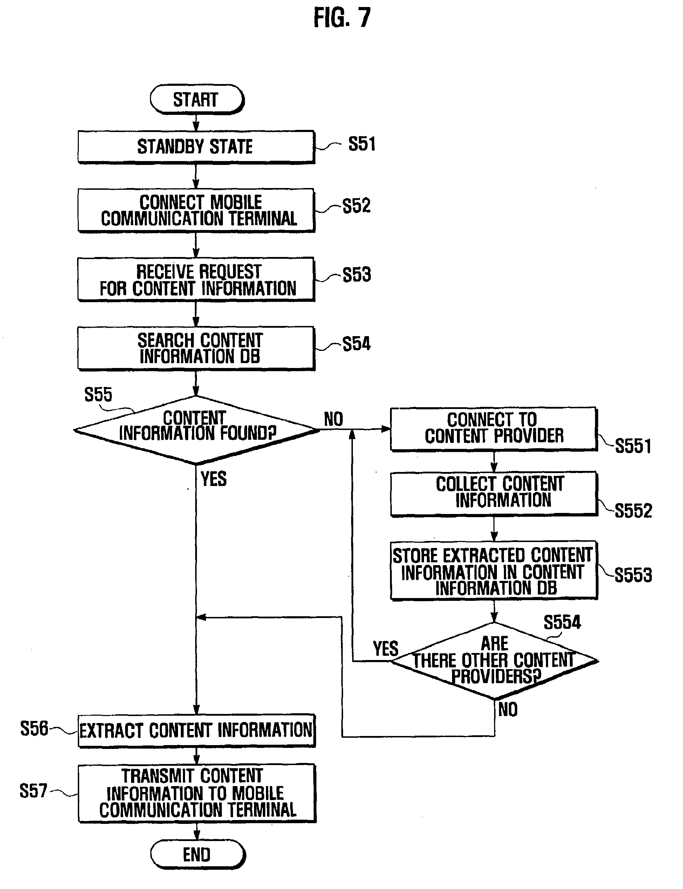

FIG. 7 is a flowchart illustrating a method of providing DRM content information according to an exemplary embodiment of the present invention.

Referring to FIGs. 1, 2, 5, and 7, in the method of providing DRM content information according to an exemplary embodiment of the present invention, the content information server 200 in a standby state (S51) is initially connected to the mobile communication terminal 100 through the network (S52). The previously collected content information is stored in the content information database 210. An exemplary embodiment of the present embodiment illustrates an example of proceeding in a state where a predetermined quantity of content information is already collected and stored in the content information database 210 of the content information server 200. However, the present invention is not limited to the example.

The information request processor 230 of the content information server 200 receives a content information request for a specific DRM content from the mobile communication terminal 100 (S53).

When the content information request is received, the information request processor 230, searches the content information database 210 (S54), and verifies whether information about the specific DRM content is found (S55).

If information about the specific DRM content is found in the content information database 210, the information request processor 230 extracts the content information about the corresponding DRM content (S56).

The information request processor 230 then transmits the content information extracted from the content information database 210 through the network communication unit 240 to the mobile communication terminal 100 (S57).

If information about the specific DRM content is not found in the content information database 210 at step S55, the information request processor 230 connects to the content server 310a of the content provider 300 through the network communication unit 240 (S551).

The information request processor 230 requests the content information to the content server 310a, and the content server 310a transmits the corresponding content information to the content information server 200 according to the request (S552).

The information request processor 230 of the content information server 200 stores the content information in the content information database 210 (S553).

In general, there may be more than one content provider 300. Accordingly, the content information server 200 verifies whether there are additional content providers 300 (S554). If there are additional content providers 300, the content information server 200 repeats the steps S551 to S553, to collect the corresponding content information stored in each of the content servers 310a.

When a process of collecting content information by connecting to all of the content providers 300 is complete, all of the corresponding content information collected from the content providers 300 is stored in the content information database 210 of the content information server 200.

The information request controller 190 then repeats the steps S56 and S57 and transmits the corresponding content information to the mobile communication terminal 100.

As described above, according to a method of acquiring DRM contents, DRM contents can be acquired by selecting the least expensive DRM content provider 300a at a present point in time using the content information server 200 and then connecting to the corresponding content provider 300a, thereby reducing the expense of using the DRM contents.

In an exemplary implementation of the present embodiment, the content information server having the content information database may be used A method of collecting corresponding content information can be used by connecting to the content provider whenever there is a request for content information from the mobile communication terminal without the content information database. According to another exemplary embodiment of the present embodiment, a method of acquiring DRM contents in a mobile communication terminal can be variously applied to electronic appliances that can use DRM contents other than the mobile communication terminal. Further, various elements and areas in the drawings are schematically illustrated. Therefore, the present invention is not limited by a relative size or space shown in the attached drawings.

According to an exemplary embodiment of the present invention, a content information server is used for collecting and storing information regarding DRM contents from a plurality of content providers when acquiring DRM contents in the mobile communication terminal. Content information is acquired through the content information server and the least expensive DRM content provider at a present point in time may be selected using the content information. The DRM content is then acquired by connecting to the corresponding content provider.

Therefore, DRM contents may be purchased by comparing a price of the DRM contents for each content provider and then selecting a desired content provider, so that expense of acquiring the DRM contents may be reduced.

While the present invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method of acquiring digital rights management (DRM) contents from a plurality of content providers comprising:
acquiring content information about DRM contents;
selecting a content provider using the acquired content information; and
acquiring DRM contents and a license from the selected content provider.

2. The method of claim 1, wherein the acquiring of the content information comprises:
connecting to a content information server comprising the content information;
sending a request for the content information to the content information server; and
acquiring the content information from the content information server.

3. The method of claim 1, wherein selecting a content provider comprises:
displaying price information of DRM content for at least one content provider using the acquired content information; and
selecting one of the displayed content providers.

4. The method of claim 1, wherein the content provider comprises a content server and a license server.

5. The method of claim 4, wherein the acquiring of the DRM contents and license comprises:
connecting to the content server of the selected content provider;
acquiring the DRM contents from the connected content server;
connecting to the license server of the selected content provider; and
acquiring a license for the DRM contents from the connected license server.

6. The method of claim 1, wherein the content information comprises price information of the DRM contents of the content provider.

7. A method of reacquiring DRM contents from a plurality of content providers comprising:
displaying expiration of a license for DRM contents;
receiving a request for reacquiring the DRM contents for which the license expiration is displayed;
acquiring information about the DRM contents for which reacquisition is requested;
selecting a content provider using the acquired content information; and
acquiring the DRM contents and the license from the selected content provider.

8. The method of claim 7, wherein the displaying of the expiration of the license comprises:
requesting execution of the DRM contents;
determining whether the license has expired for the DRM contents for which the execution is requested; and
displaying, if the license for the DRM contents has expired, a message for informing of the expiration of the license.

9. The method of claim 7, wherein the acquiring of the content information comprises:
connecting to a content information server comprising the content information;
sending a request for the content information to the content information server; and
acquiring the content information from the content information server.

10. The method of claim 7, wherein selecting a content provider comprises:
displaying price information of the DRM content for at least one content provider using the acquired content information; and
selecting one of the displayed content providers.

11. The method of claim 7, wherein the content provider comprises a content server and a license server.

12. The method of claim 11, wherein the acquiring of the DRM contents and license comprises:
connecting to the content server of the selected content provider;
acquiring the DRM contents from the connected content server;
connecting to the license server of the selected content provider; and
acquiring the license for the DRM contents from the connected license server.

13. The method of claim 7, further comprising automatically executing the reacquired DRM contents after the acquiring of the DRM contents and license.

14. The method of claim 7, wherein the content information comprises price information of the DRM contents of the content provider.

15. A mobile communication terminal comprising:
an information acquisition unit for acquiring content information about DRM contents;
a provider selecting unit for selecting a content provider using the acquired content information;
a content acquisition unit for acquiring DRM contents and a license from the selected content provider; and
a network communication unit for receiving at least one of the acquired DRM contents, license, and content information.

16. The mobile communication terminal of claim 15, wherein the information acquisition unit acquires the content information by connecting to a content information server comprising the content information.

17. A method of providing information about DRM contents in a mobile communication terminal comprising:
receiving a request signal for content information from the mobile communication terminal;
extracting the requested content information based on the request signal for content information; and
transmitting the extracted content information to the mobile communication terminal.

18. The method of claim 17, wherein the receiving of the request signal comprises:
connecting to the mobile communication terminal; and
receiving the request signal for information about specific DRM contents from the connected mobile communication terminal.

19. The method of claim 17, wherein the extracting of the requested content information comprises using a content information database in which various content information is stored.

20. The method of claim 19, wherein the extracting of the requested content information comprises:
searching the content information database to determine whether the requested content information is in the content information database; and
extracting, if the requested content information is in the content information database, the content information from the content information database.

21. The method of claim 20, further comprising:
if the requested content information is not in the content information database in the searching of the content information database,
connecting to a content provider;
requesting the content information to the content provider;
acquiring the requested content information from the content provider;
storing the acquired content information in the content information database; and
extracting the stored content information.

22. The method of claim 21, wherein, if there is a plurality of content providers, connecting to the content providers, requesting the content information, acquiring the requested content information, and storing the acquired content information, are sequentially repeated for each of the plurality of content providers before extracting the stored content information.

23. The method of claim 19, wherein the extracting of the requested content information comprises:
connecting to a content provider;
sending a request for the content information to the content provider;
acquiring the requested content information from the content provider;
storing the acquired content information in the content information database; and
extracting the stored content information.

24. The method of claim 23, wherein, if there is a plurality of content providers, the connecting to the content providers, the requesting of the content information, the acquiring of the requested content information, and the storing of the acquired content information, are sequentially repeated for each of the plurality of the content providers before extracting the stored content information.

25. A DRM content information server comprising:
a content information database comprising information about DRM contents;
a network communication unit for receiving a request signal for content information from a mobile communication terminal; and
an information processor for extracting the content information requested by the mobile communication terminal from the content information database and transmitting the extracted content information to the mobile communication terminal through the network communication unit.

26. The DRM content information server of claim 25, wherein, if the content information requested by the mobile communication terminal is not in the content information database, the information processor collects the requested content information by connecting to each of the plurality of content providers.

27. A DRM content acquisition system comprising:
a plurality of content providers, each comprising a content server for providing DRM contents and a license server for providing a license for the DRM contents;
a content information server for collecting and storing content information from the content provider; and
a mobile communication terminal for acquiring the content information from the content information server, selecting a content provider based on the acquired content information, and acquiring the DRM contents and the license from the selected content provider.

28. The DRM content acquisition system of claim 27, wherein the content information stored in the content server is price information for each content provider of the DRM contents.

29. The method of claim 3 wherein the display of the price information comprises display of the price information of DRM content for each content provider.

30. The method of claim 10 wherein the display of the price information comprises display of the price information of DRM content for each content provider
